# EUROPÄISCHE PATENTSCHRIFT

(11) **EP 0 370 172 B1**
(45) Veröffentlichungstag und Bekanntmachung des Hinweises auf die Patenterteilung: **12.10.1994**
(21) Anmeldenummer: 89114163.2
(22) Anmeldetag: 01.08.1989
(51) Int. Cl.: B60R 22/20

(54) **Vorrichtung zur stufenweisen Höhenverstellung eines Befestigungs- oder Umlenkpunktes für einen Sicherheitsgurt o. dgl.**
Device for incrementally adjusting the height of an anchoring or deviation point for a safety belt or the like
Dispositif de réglage en hauteur échelonné pour ferrure de fixation ou de renvoi d'une ceinture de sécurité ou équivalent

(30) Priorität: 25.10.1988 DE 3836327
(43) Veröffentlichungstag der Anmeldung: 30.05.1990
(73) Patentinhaber: Griesemer, Albert, D-56457 Westerburg (DE)
(72) Erfinder: Griesemer, Albert, D-56457 Westerburg (DE)
(74) Vertreter: Grommes, Karl F., Dr.

(56) Entgegenhaltungen:
- EP-A- 0 230 798
- DE-U- 8 800 419
- DE-U- 8 807 250

## Beschreibung

### Technisches Gebiet

Die Erfindung betrifft eine Vorrichtung zur stufenweisen Höhenverstellung eines Befestigungs- oder Umlenkpunktes für einen Sicherheitsgurt, bestehend aus einer Führungsschiene mit einem symmetrisch zur Mittellinie verlaufenden Langloch oder Schlitz und einem an der Rückseite der Führungsschiene verschieblich angeordneten Verstellteil, welches ein Halteteil einschließt, wobei Rastnasen und entsprechende Aussparungen vorgesehen sind, wodurch das Verstellteil zu Arretierzwecken mit der Führungsschiene in festen Eingriff bringbar ist, sowie einem Federteil, welches das Verstellteil in Arretierstellung halten soll.

### Stand der Technik

Vorrichtungen dieser Art sind bereits verschiedentlich vorgeschlagen worden. Von einzelnen, recht komplizierten Ausführungsformen einmal abgesehen, umfassen solche Vorrichtungen im wesentlichen drei Bauteile, nämlich eine Führungsschiene, ein Verstellteil und ein Federteil. Dabei ist das Verstellteil so ausgebildet, daß es an oder auch in der Führungsschiene gehalten und geführt wird. Dies konnte bisher nur durch eine spezielle Formgebung erreicht werden. So sind beispielsweise für flache wie auch kanalförmige Führungsschienen (siehe US-A-4,640,550) Verstellteile in Form einer die Führungsschiene umgebenden Hülse o. dgl. bekannt. Ferner sind flache Verstellteile bekannt, welche erst in Verbindung mit einem eigenen Komplementärteil bzw. einem weiteren Anschlußteil, z. B. einer Gurtumlenkeinrichtung (vgl. DE-A-36 18 973) ihren Halt und ihre Führung finden. Bei alledem hat das Federteil ausschließlich die Funktion, eine gewünschte Arretierstellung zu bewahren.

Durch die gattungsgemäße EP-A-0 230 798 ist ein Verstellteil mit einem eigenen Halteteil bekannt, wobei das Halteteil gleichzeitig als Befestigungsteil oder Träger für das Federteil dient. Letzteres wirkt zwischen dem Halteteil und der Führungsschiene. Zu seiner Ausbildung steht nur wenig Raum zur Verfügung; auch bleibt es infolge seiner einstückigen Verbindung mit dem Halteteil auf dessen Werkstoff festgelegt. So wird mit dem vorgenannten Dokument ein spezielles Halteteil aus Kunststoff mit elastischen Lamellen als Federteil vorgeschlagen. Das Federteil hat wiederum ausschließlich die Funktion, eine gewünschte Arretierstellung zu bewahren, wobei der Ausbildung von Federteil und Verstellteil hier jedoch enge Grenzen gesetzt sind.

Bei einer weiteren Ausführungsform gemäß der DE-U-8 800 419 ist daran gedacht, daß auch bei überhöhter Belastung des Umlenkbeschlages und einer daraus resultierenden Durchbiegung und Verbiegung der Schiene dennoch ein sicherer Eingriff der Rastnasen erhalten bleibt. Zu dem Zweck wird vorgeschlagen, daß der höhenverstellbare Umlenkbeschlag zu seinem Verstellteil (Schlitten) noch ein spezielles Teil erhält, nämlich eine verstellbar geführte, formstabile Spange. Damit wird auch jenes Verstellteil verhältnismäßig aufwendig und kompliziert.

### Darstellung der Erfindung

Hier setzt nun die Erfindung an. Sie will eine Vorrichtung der eingangs genannten Art so weiterbilden, daß sie mit nur wenigen, einfach gestalteten Elementen von hoher Belastbarkeit auskommt. Dadurch sollen eine rationelle Herstellung ermöglicht und der Gebrauchswert gesteigert werden.

Gelöst wird die Aufgabe dadurch, daß das Federteil eine Blattfeder ist, welche sich teilweise über die Länge sowie die Breite des Verstellteils erstreckt, wobei die Blattfeder mit dem Verstellteil zu einer an der Führungsschiene unmittelbar angeklemmten Baueinheit verbunden ist und als alleiniges Halteteil ohne zusätzliches Führungsteil für das Verstellteil wirkt.

Wie ersichtlich, sollen nach dem Vorschlag der Erfindung Verstellteil und Federteil in besonderer Weise aufeinander abgestimmt und miteinander verbunden werden, nämlich zu einer speziellen Baueinheit ohne weiteres Führungs- und Halteteil. Die Erfindung geht davon aus, daß das Federteil zusätzlich zu den Arretierzwecken noch zu einer weiteren Funktion herangezogen werden kann, das ist zum Halten und Führen des Verstellteils. Diesem Gedanken liegt die Erkenntnis zugrunde, daß das Verstellteil nicht über seinen gesamten Umfang gleichermaßen belastet wird und deshalb über seinen Umfang auch nicht gleichmäßig dimensioniert zu sein braucht.

So genügt es, den nicht auf Zug beanspruchten Bereich des Verstellteils, welcher lediglich für eine formschlüssige Verbindung zur Führungsschiene sorgt, wesentlich schwächer und insbesondere in einfacher Blechstärke auszuführen. Für diesen Bereich ist jetzt erfindungsgemäß eine Blattfeder vorgesehen, welche mit dem Verstellteil zu einer neuen Funktionseinheit zu verbinden ist. So dient die Blattfeder nicht mehr allein der Arretierung, sondern zusätzlich dem Halt und der Führung des Verstellteils an oder in der Führungsschiene.

Handelt es sich um eine flache Führungsschiene, so ist die Blattfeder an der Vorderseite anzuordnen und im Bereich des Langlochs mit dem Verstellteil zu verbinden, was zweckmäßigerweise an den Endabschnitten geschieht. Im Falle einer kanalförmigen Führungsschiene kann die Blattfeder ebenso an der Vorderseite angeordnet werden, alternativ aber auch an der Rückseite des Verstellteils, wobei sich die Blattfeder dann gegen den Boden der Führungsschiene abstützt. In jedem Falle steht die Blattfeder in unmittelbarer Verbindung zum Verstellteil und ergänzt dessen Form. So kann das Verstellteil im Kern recht einfach geformt und insbesondere im wesentlichen flach ausgebildet sein. Eine solche Form ist mühelos durch Stanzen und mäßiges Verformen aus üblichen Bandstahl zu erzielen. Das Verbinden mit der Blattfeder kann in manchen Fällen bereits vor dem Aufschieben auf die Führungsschiene geschehen, in anderen Fällen jedoch erste beim Ansetzen an die Führungsschiene. Letzteres gilt vor allem dann, wenn die Blattfeder an der Vorderseite einer mit Langloch versehenen Führungsschiene angeordnet werden soll und das Verstellteil mit einem Abschnitt, z.B. einem Gewindedurchzug (zur Befestigung eines Anschlußteiles) durch das Langloch hindurchtritt.

Die Blattfeder kann, ihrer komplexen Aufgabe entsprechend, unterschiedlich gebogene oder vorgespannte Bereiche oder Abschnitte aufweisen, insbesondere solche, welche der Abstützung und Führung entlang der Führungsschiene dienen und solche, welche der (elastischen) Verbindung zum Verstellteil dienen. Die Verbindung kann im übrigen lösbar oder unlösbar sein; für die Wirksamkeit der Erfindung bleibt dies ohne Einfluß.

Zweckmäßigerweise besitzt das Verstellteil am Anfang und/oder Ende eine durch das Langloch hindurchreichende Aufkantung o. dgl. zur Verbindung mit der Blattfeder.

Vorteilhaft weist die Aufkantung einen Schlitz o. dgl. zur Aufnahme eines streifenförmigen Endabschnittes der Blattfeder auf.

Nach einem anderen Vorschlag ist die Aufkantung mit einer Rastnase o. dgl. zum Festklemmen eines Endabschnittes der Blattfeder versehen.

In weiterer Ausgestaltung des Erfindungsgedankens weist die Aufkantung seitliche Überstände über das Langloch auf. - Die vorgeschlagenen Überstände wirken als Anschläge, nämlich einmal bei jeder Querbewegung zum Lösen des Verstellteils und beim Aufbiegen der Führungsschiene (entlang des Langloches oder Schlitzes) im Falle eines Aufpralls. Damit kommt den Überständen die Doppelfunktion einer Hubbegrenzung für den Normalfall und eines Stabilisators für den Gefahrenfall.

Vorteilhaft sind am Verstellteil Führungsnasen vorgesehen.

### Kurze Beschreibung der Zeichnung

Weitere Einzelheiten und Vorteile werden noch anhand der Zeichnung für verschiedene Ausführungsbeispiele beschrieben. Darin zeigen:
- Fig. 1: eine erfindungsgemäße Vorrichtung mit flacher Führungsschiene in Vorderansicht,
- Fig. 2: den Gegenstand von Fig. 1 in Seitenansicht,
- Fig. 3: eine etwas andere Ausführungsform in perspektivischer Ansicht,
- Fig. 4a: den Gegenstand von Fig. 3 im Schnitt entlang der Linie IV - IV, und zwar in Arretierstellung,
- Fig. 4b: denselben Gegenstand wie in Fig. 4a, jedoch außerhalb seiner Arretierstellung,
- Fig. 5: den Gegenstand von Fig. 3 im Schnitt entlang der Linie V - V,
- Fig. 6: eine weitere Ausführungsform in perspektivischer Ansicht,
- Fig. 7a: den Gegenstand von Fig. 6 im Schnitt entlang der Linie VII - VII ohne Blattfeder in Arretierstellung,
- Fig. 7b: denselben Gegenstand wie in Fig. 7a, jedoch außerhalb seiner Arretierstellung,
- Fig. 8: den Gegenstand von Fig. 6 im Schnitt entlang der Linie VIII - VIII, ebenfalls ohne Blattfeder,
- Fig. 9: noch eine weitere Ausführungsform in perspektivischer Ansicht,
- Fig. 10a: den Gegenstand von Fig. 9 im Schnitt entlang der Linie X - X ohne Blattfeder in Arretierstellung,
- Fig. 10b: denselben Gegenstand wie in Fig. 10a, jedoch außerhalb seiner Arretierstellung,
- Fig. 11: den Gegenstand von Fig. 9 im Schnitt entlang der Linie XI - XI, ebenfalls ohne Blattfeder,
- Fig. 12: eine erfindungsgemäße Vorrichtung mit kanalförmiger Führungsschiene in perspektivischer Ansicht,
- Fig. 13a: den Gegenstand von Fig. 12 im Schnitt entlang der Linie XIII - XIII ohne Blattfeder in Arretierstellung,
- Fig. 13b: denselben Gegenstand wie in Fig. 13a, jedoch außerhalb seiner Arretierstellung,
- Fig. 14: ein etwas anders geformtes Federteil, wie es unter anderem ebenfalls Verwendung finden kann, in Draufsicht,
- Fig. 15: ein etwas anderes Verstellteil, nämlich mit weiteren Überständen und zusätzlichen Führungsnasen, vergrößert in Seitenansicht, und
- Fig. 16: den Gegenstand von Fig. 15 in Draufsicht.

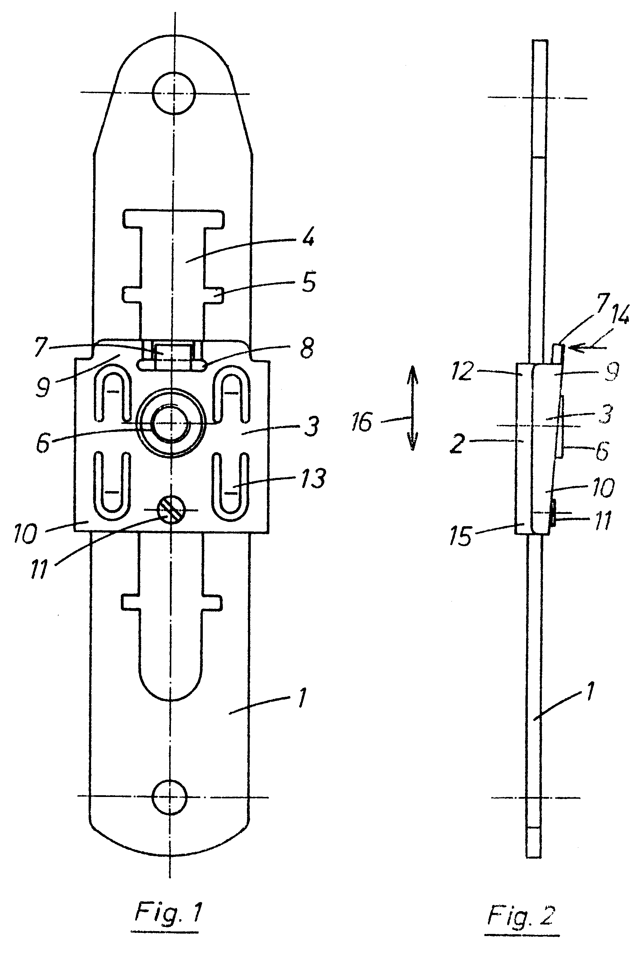

Nach den Fig. 1 und 2 ist an der Rückseite einer flachen Führungsschiene 1 ein Verstellteil 2 angeordnet, das im wesentlichen ebenfalls flach ist, oder genauer gesagt, in etwa U-förmig mit nur kurzen Schenkeln. Jenes Verstellteil 2 ist mit einer Blattfeder 3 verbunden, welche auf die Vorderseite der Führungsschiene 1 aufgesetzt ist. In ihrer Länge und Breite entspricht die Blattfeder 3 in etwa dem Verstellteil 2. Beide zusammen bilden eine Baueinheit, welche an die Führungsschiene 1 angeklemmt ist. Im einzelnen besitzt die Führungsschiene 1 ein Langloch 4, welches achssymmetrisch verläuft. Jeweils auf gleicher Höhe sind rechts und links am Langloch 4 Aussparungen 5 angeordnet. Das Verstellteil 2 weist an seiner Vorderseite einen durch das Langloch 4 hindurchtretenden Gewindedurchzug 6 auf, ferner Aufkantung 7, welche durch einen Schlitz 8 im oberen Endabschnitt 9 der Blattfeder 3 hindurchtritt und mittels eines abgebogenen Endes für eine sichere Befestigung sorgt. Der untere Abschnitt 10 der Blattfeder 3 ist etwas anders mit dem Verstellteil 2 verbunden, nämlich mittels einer Schraube 11. Die Blattfeder 3 ist im übrigen teilweise seitlich um die Schenkel des Verstellteils 2 herumgeführt, so daß die daraus gebildete Baueinheit in etwa Hülsenform aufweist.

Wie Fig. 2 erkennen läßt, liegt das Verstellteil 2 dicht an der Führungsschiene 1 an, ebenso der untere Endabschnitt 10 der Blattfeder 3, während der obere Endabschnitt 9 etwas von der Führungsschiene 1 absteht. In der gezeigten Lage befindet sich das Verstellteil 2 in Arretierstellung, indem es nämlich mit zwei (hier nicht näher dargestellten) Rastnasen am Anfang (= oberen Endabschnitt) 12 des Verstellteils 2 in zwei (vom oberen Endabschnitt 9 der Blattfeder 3 verdeckte) Aussparungen 5 eingreift. In dieser Arretierstellung wird das Verstellteil 2 hier mit Hilfe aus der Blattfeder 3 ausgestanzter und gegen die Führungsschiene 1 gebogener Federbeine oder Federstreifen 13 elastisch gehalten. Insoweit wirkt die Blattfeder 3 hier als Federteil zur Sicherung der Arretierstellung.

Wie weiter aus Fig. 2 ersichtlich, besteht zwischen dem abgebogenen Ende der Aufkantung 7 und der Führungsschiene 1 ein freier Zwischenraum. Um dieses Maß kann durch Einwirkung einer Kraft entsprechend dem Pfeil 14 der Anfang 12 des Verstellteils 2 bewegt werden. Das Verstellteil 2 dreht sich oder kippt dabei um sein Ende (= seinen unteren Endabschnitt) 15. Diese Bewegung quer zur eigentlichen Verschieberichtung bringt die Rastnasen des Verstellteils außer Eingriff mit den Aussparungen 5, löst also das Verstellteil und ermöglicht anschließend der Baueinheit aus Verstellteil 2 und Blattfeder 3 eine Längsbewegung in der eigentlichen Verschieberichtung gemäß dem Doppelpfeil 16.

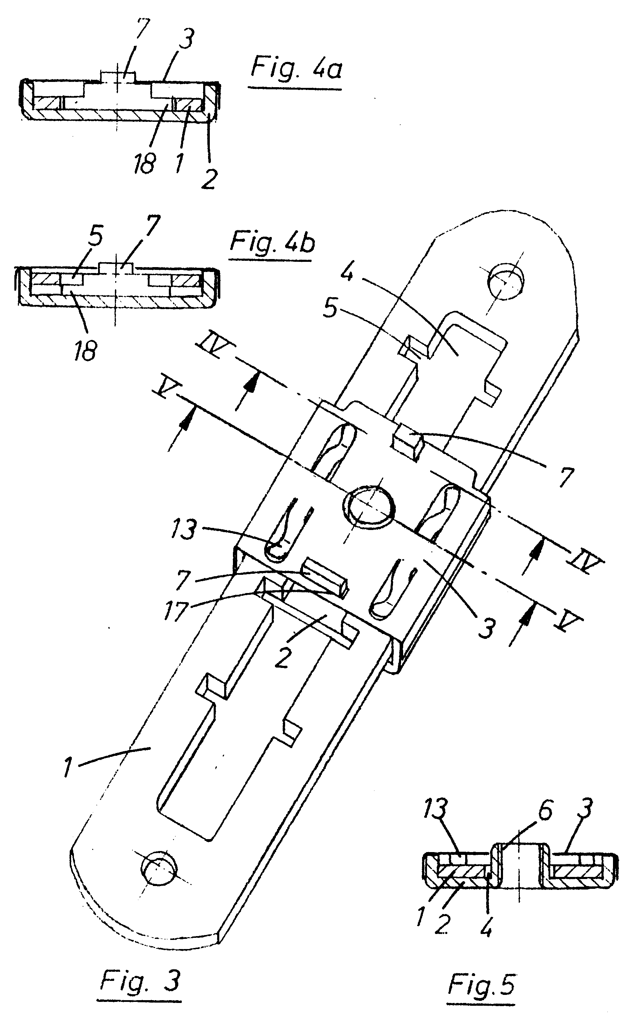

Gemäß den Fig. 3 bis 5 kommen für die Verbindung von Blattfeder 3 und Verstellteil 2 beispielsweise auch aufrechte Aufkantungen 7 in Betracht, auf die die Blattfeder 3 mit entsprechenden Schlitzen an ihren Endabschnitten aufgesteckt werden kann. Die Aufkantungen 7 besitzen jeweils eine Rastnase 17, welche ein ungewolltes Lösen verhindert. - Für die Arretierung des Verstellteils 2 in Bezug auf die Führungsschiene 1 sorgen Rastnasen 18, welche sich jeweils in Eingriff mit einer Aussparung 5 bringen lassen (siehe Fig. 4a) bzw. daraus wieder durch Niederdrükken der Baueinheit aus Verstellteil 2 und Blattfeder 3 zu lösen sind (siehe Fig. 4b). Selbstverständlich können die Aussparungen 5 und die Rastnasen 18 noch in beliebiger anderer Weise aufeinander abgestimmt und ausgestaltet werden.

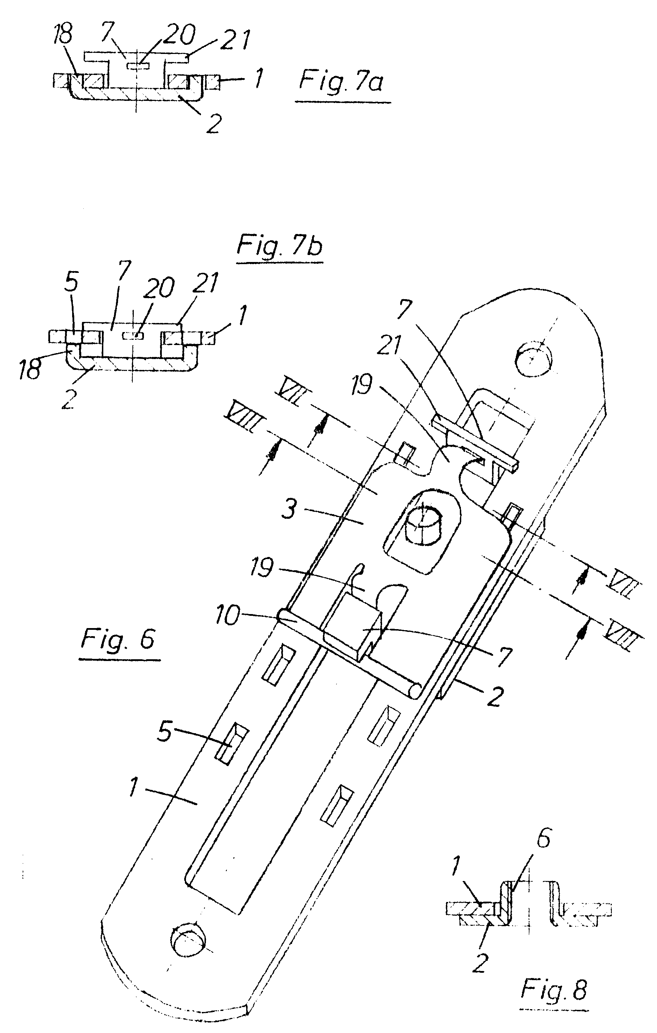

Nach den Fig. 6 bis 8 kann die Blattfeder 3 zur Verbindung mit dem Verstellteil 2 beispielsweise auch streifenförmige Endabschnitte 19 aufweisen, welche in Schlitzen 20 an den Aufkantungen 7 eingreifen und insbesondere durch Umbiegen ihrer freien Enden in dieser Lage gesichert sind. Unabhängig davon können die restlichen Endabschnitte, wie hier der untere Endabschnitt 10, eine andere Form besitzen, beispielsweise aufgerollt sein. Dadurch lassen sich Stabilität und Zusammenhalt verbessern. Im übrigen weist im gezeigten Ausführungsbeispiel eine Aufkantung 7 seitliche Überstände 21 auf, welche normalerweise als Hubbegrenzung (vgl. Fig. 7b) und im Gefahrenfalle als Stabilisator gegen ein übermäßiges Aufbiegen der Führungsschiene 1 wirken.

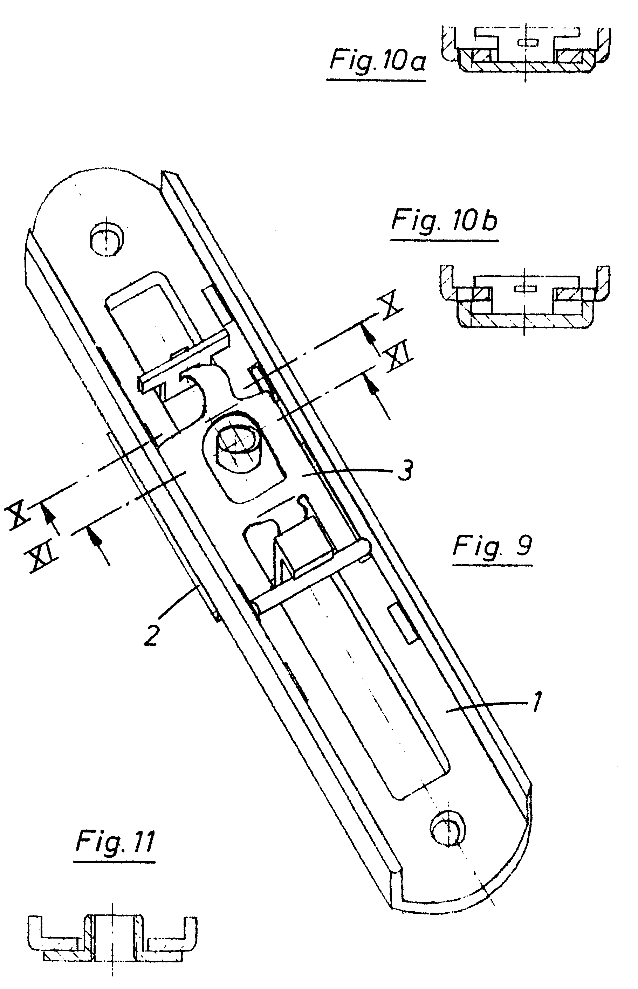

Ähnliches wie für das vorerwähnte Ausführungsbeispiel gilt für das weitere Ausführungsbeispiel gemäß den Fig. 9 bis 11. Bei letzterem ist insbesondere die Führungsschiene 1 etwas anders geformt, indem sie hochgebogene Längsränder zum Schutz der beweglichen Baueinheit aus Verstellteil 2 und Blattfeder 3 besitzt. Wie auch aus diesem Beispiel hervorgeht, kann der Erfindungsgedanke in vielfältiger Form verwirklicht werden.

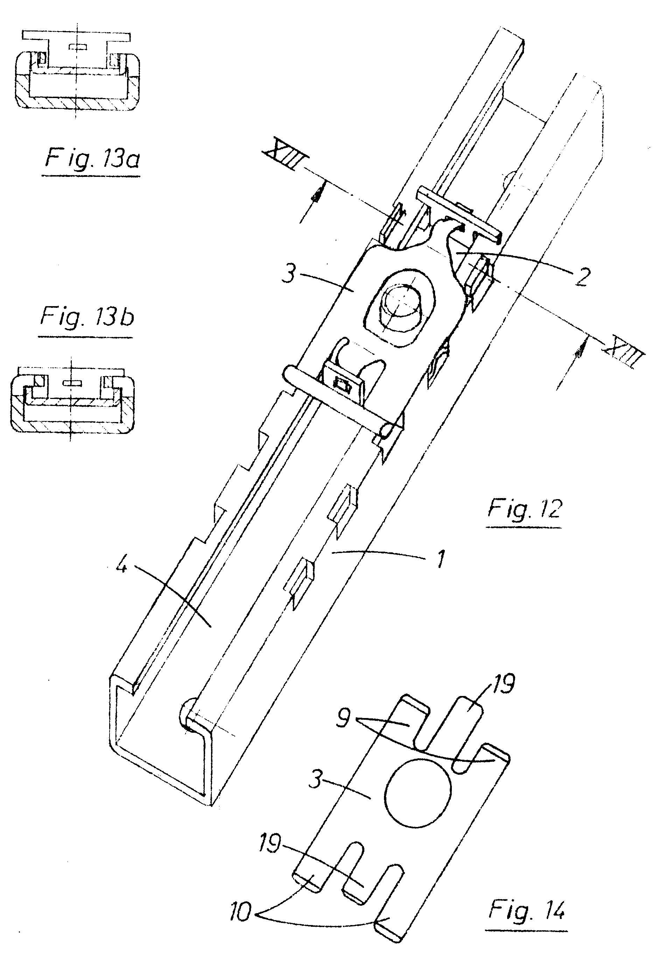

Nach den Fig. 12 bis 13b kann die Führungsschiene 1 auch kanalförmig sein und statt eines Langloches einen durchgehenden Schlitz 4 besitzen. Die Baueinheit aus Verstellteil 2 und Blattfeder 3 kann dabei wie bisher angeordnet und verbunden sein. Alternativ besteht bei jener Form von Führungsschiene aber auch die Möglichkeit, die Blattfeder hinter dem Verstellteil mit in Kanal anzuordnen, wo sie, mit dem Verstellteil verbunden, zu dessen Halt und Führung dient, neben ihrer weiteren Funktion zur Sicherung einer gewählten Arretierstellung.

Fig. 14 verdeutlicht, daß auch die Blattfeder 3 verschiedene Formen besitzen kann, nämlich neben streifenförmigen Endabschnitten 19 zur Verbindung mit dem Verstellteil 2 auch streifenförmig ausgebildete obere und untere Endabschnitte 9, 10 zum Gleiten auf der Führungsschiene 1.

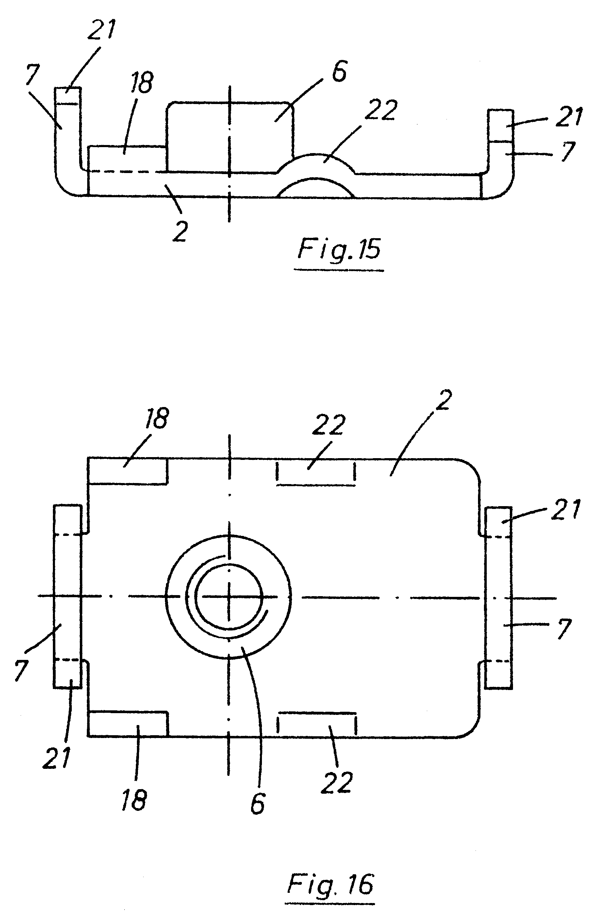

Aus den Fig. 15 und 16 geht im übrigen hervor, daß auch das Verstellteil 2 unterschiedliche Form haben kann. So können insbesondere an allen Aufkantungen 7 Überstände 21 vorgesehen sein. Je nach Abstand zur Führungsschiene 1 wirken jene Überstände 21 als Hubbegrenzung und Stabilisator bzw. nur als Stabilisator. Außerdem finden sich an dem dargestellten Verstellteil 2 zusätzlich zu den Rastnasen 18 noch Führungsnasen 22. Letztere sind im mittleren Bereich des Verstellteils 2 angeordnet, zeigen in Seitenansicht ein gerundetes Profil und wirken ebenfalls mit den Aussparungen der Führungsschiene zusammen. Jene Führungsnasen 22 erleichtern die Verschiebung des Verstellteils 2, d.h. der aus Verstellteil 2 und Blattfeder 3 gebildeten Baueinheit in überraschend vorteilhafter Weise. Das Verschieben erfolgt nicht mehr ruckartig, und es kommt auch kaum mehr zu einem unerwünschten Durchrasten, vielmehr verhelfen die Führungsnasen 22 zu einem mühelosen Gleiten und Aufsuchen der gewünschten Arretierstellung.

## Patentansprüche

1. Vorrichtung zur stufenweisen Höhenverstellung eines Befestigungs- oder Umlenkpunktes für einen Sicherheitsgurt, bestehend aus einer Führungsschiene ( 1 ) mit einem symmetrisch zur Mittellinie verlaufenden Langloch oder Schlitz ( 4 ) und einem an der Rückseite der Führungsschiene ( 1 ) verschieblich angeordneten Verstellteil ( 2 ), welches ein Halteteil einschließt, wobei Rastnasen ( 18 ) und entsprechende Aussparungen ( 5 ) vorgesehen sind, wodurch das Verstellteil ( 2 ) zu Arretierzwecken mit der Führungsschiene ( 1 ) in festen Eingriff bringbar ist, sowie einem Federteil, welches das Verstellteil ( 2 ) in Arretierstellung halten soll, **dadurch gekennzeichnet,** daß das Federteil eine Blattfeder ( 3 ) ist, welche sich teilweise über die Länge sowie die Breite des Verstellteils ( 2 ) erstreckt, wobei die Blattfeder ( 3 ) mit dem Verstellteil ( 2 ) zu einer an der Führungsschiene ( 1 ) unmittelbar angeklemmten Baueinheit verbunden ist und als alleiniges Halteteil ohne zusätzliches Führungsteil für das Verstellteil ( 2 ) wirkt.

2. Vorrichtung nach Anspruch 1, dadurch gekennzeichnet, daß das Verstellteil ( 2 ) am Anfang ( 12 ) und/oder Ende ( 15 ) eine durch das Langloch ( 4 ) hindurchreichende Aufkantung ( 7 ) o. dgl. zur Verbindung mit der Blattfeder ( 3 ) besitzt.

3. Vorrichtung nach Anspruch 2, dadurch gekennzeichnet, daß die Aufkantung ( 7 ) einen Schlitz ( 20 ) o. dgl. zur Aufnahme eines streifenförmigen Endabschnittes ( 19 ) der Blattfeder ( 3 ) aufweist.

4. Vorrichtung nach Anspruch 2, dadurch gekennzeichnet, daß die Aufkantung ( 7 ) mit einer Rastnase ( 17 ) o. dgl. zum Festklemmen eines Endabschnittes ( 9, 10 ) der Blattfeder ( 3 ) versehen ist.

5. Vorrichtung nach einem der Ansprüche 2 bis 4, dadurch gekennzeichnet, daß die Aufkantung ( 7 ) seitliche Überstände (21) über das Langloch ( 4 ) aufweist.

6. Vorrichtung nach einem der Ansprüche 1 oder 2, dadurch gekennzeichnet, daß am Verstellteil ( 2 ) Führungsnasen ( 22 ) angeordnet sind.

## Claims

1. A device for incrementally adjusting the height of an anchoring or deviation point for a safety belt, consisting of a guide rail (1) with an oblong hole or slit (4) running symmetrically to the centre line, and with an adjustment piece (2) arranged so as to be displaceable on the reverse side of the guide rail (1), which adjustment piece (2) includes a holding piece, in which detent lugs (18) and corresponding recesses (5) are provided, whereby the adjustment piece (2) is able to be brought into fixed engagement with the guide rail (1) for arresting purposes, and also with a spring piece, which is to hold the adjustment piece (2) in the arresting position, characterised in that the spring piece is a plate spring (3) which extends partially over the length and also the breadth of the adjustment piece (2), in which the plate spring (3) is connected with the adjustment piece (2) as a structural unit which is clamped directly on the guide rail (1) and acts as sole holding piece, without additional guide piece, for the adjustment piece (2).

2. A device according to Claim 1, characterised in that the adjustment piece (2) has at the beginning (12) and/or end (15) an upward edging (7) or the like extending through the oblong hole (4) for connection with the plate spring (3).

3. A device according to Claim 2, characterised in that the upward edging (7) has a slit (20) or the like to receive a strip-shaped end section (19) of the plate spring (3).

4. A device according to Claim 2, characterised in that the upward edging (7) is provided with a detent lug (17) or the like for the clamping of an end section (9, 10) of the plate spring (3).

5. A device according to one of Claims 2 to 4, characterised in that the upward edging (7) has lateral projections (21) over the oblong hole (4).

6. A device according to one of Claims 1 or 2, characterised in that guide lugs (22) are arranged on the adjustment piece (2).

## Revendications

1. Dispositif pour le réglage en hauteur discontinu d'un point de fixation ou de renvoi d'une ceinture de sécurité, constitué par un rail de guidage (1) pourvu d'un trou allongé ou d'une fente (4) qui s'étend symétriquement par rapport à l'axe central, et par une pièce de réglage (2) qui est montée coulissante sur le côté arrière du rail de guidage (1) et qui renferme une pièce de retenue, cependant qu'il est prévu des becs d'encliquetage (18) et des encoches correspondantes (5) au moyen desquels la pièce de réglage (2) peut être amenée solidement en prise avec le rail de guidage (1) à des fins de blocage, ainsi que par une pièce élastique qui est chargée de maintenir la pièce de réglage (2) dans sa position de blocage, caractérisé par le fait que la pièce élastique est une lame de ressort (3) qui s'étend partiellement sur la longueur et sur la largeur de la pièce de réglage (2), cependant que la lame de ressort (3) est reliée à la pièce de réglage (2) pour former un ensemble qui est directement serré sur le rail de guidage (1), et qu'elle sert de pièce de retenue unique pour la pièce de réglage (2), sans pièce de guidage supplémentaire.

2. Dispositif selon la revendication 1, caractérisé par le fait que la pièce de réglage (2) comporte, sur son début (12) et/ou sur sa fin (15), un bord de chant (7) ou similaire qui traverse le trou allongé (4) et qui est destiné à la liaison avec la lame de ressort (3).

3. Dispositif selon la revendication 2, caractérisé par le fait que le bord de chant (7) comporte une rente (20) ou similaire qui est destinée à recevoir une partie terminale en forme de patte (19) de la lame de ressort (3).

4. Dispositif selon la revendication 2, caractérisé par le fait que le bord de chant (7) est pourvu d'un bec d'encliquetage (17) ou similaire qui est destiné à serrer une partie terminale (9, 10) de la lame de ressort (3).

5. Dispositif selon l'une des revendications 2 à 4, caractérisé par le fait que le bord de chant (7) comporte des parties en saillie latérales (21) au-dessus du trou allongé (4).

6. Dispositif selon l'une des revendications 1 et 2, caractérisé par le fait que des becs de guidage (22) sont disposés sur la pièce de réglage (2).
